# EUROPEAN PATENT APPLICATION

(11) **EP 1 089 410 A1**
(43) Date of publication of application: **04.04.2001**
(21) Application number: 99119527.2
(22) Date of filing: 01.10.1999
(51) Int. Cl.: H02G 1/14, H02G 15/18

(54) **Core crusher**

(71) Applicant: 3M Innovative Properties Company, St. Paul, Minnesota 55133-3427 (US)
(72) Inventor: The designation of the inventor has not yet been filed
(74) Representative: VOSSIUS & PARTNER

(57) **Abstract**

The present invention relates to a device, a pair of pliers, system and method for collapsing so-called crushable cores. A major application for this technology is the use of such crushable cores in connection with cable harnesses, especially for the automotive, air craft and railway industry. According to a preferrred embodiment of the present invention breakage of the frangible parts of such crushable cores is provided by holding it in a relatively fixed position in a space and at the same time reducing the space.

## Description

The invention relates to a core crusher, in particular to a pneumatic or hydraulic core crusher for the protection of extended articles against, e.g., moisture, dirt and mechanical impact.

It is commonly known to use elastic hoses as sleeves which are placed over the extended articles. The most significant applications can be found in the electrical field where it is necessary to protect electrical splices which includes in addition the protection against electrical shock.

Several decades ago so-called heat shrink sleeves were developed which were heated and expanded and designed in a manner that upon cooling they could stay in the expanded condition. The sleeve was then placed over the portion to be protected, typically an electrical connection, and then shrunk down by the application of heat. The disadvantage was the use of an open flame and the somewhat uncontrolled manner of the shrinking process.

Therefore, so-called cold shrink technologies have been introduced several years ago. In this case the sleeve is expanded and placed onto a support core by some method which upon removal allowed a shrinking of the sleeve onto the article to be protected without the above mentioned disadvantages. Typical applications can be found in the literature and especially comprise helical support cores which allow the removal of the support core by unwinding a coil causing the collapsing of the sleeve.

Also this technique has some disadvantages as it represents a waste problem. The support cores in the different forms have to be discarded. This can represent a major hurdle, for example, when it is necessary to establish protections for a multiplicity of cable connections. Therefore, the problem was to find a solution in which such a waste can be eliminated.

This was successfully established with the introduction of the so-called crushable cores which present support cores similar to the above described ones, however, with the very specific feature that upon additional application of external mechanical forces the entire core construction would collapse leaving the individual portions of the core within the sleeve thus eliminating the waste problem.

In a typical application these crushable cores are brought to collapse through a manual operation. This is no problem for applications in which only a very small number of connections have to be protected. However, a major application for this technology is the use of such crushable cores in connection with cable harnesses, especially for the automotive, aircraft and railway industry. These harnesses are prepared separately prior to the installation into, e.g., a car. They are manufactured in large quantities. Typically each harness can comprise several connections which need protection especially against moisture.

Therefore, problems arise when it is tried to efficiently protect a very large number of cable connections with a high standard of quality. It has been identified that this is difficult when maintaining the crushing or collapsing as a manual operation. Since this has to be done several hundred times, if not several thousand times, per day the problem arose that a separate tool would be needed.

First experiments, however, have shown that a simple tool compressing the core is not operational but that the human hand presents peculiar capabilities of effecting such a crushing or collapsing. Apparently a more sophisticated approach is needed in order to replace the human hand. This demand is achieved with the features of the claims.

The above described crushable core is essentially described in US-A-5 406 871 and corresponding EP-A-0 530 952 as well as EP-A-0 750 381 (all assigned to Minnesota Mining and Manufacturing Company).

EP-A-0 530 952 discloses a cover assembly of expanded elastomeric tubing having frangible support core structures. The cover assembly includes an expanded elastomeric tube supported in the expanded state by an internal frangible support core. The support core possesses sufficient strength to resist contraction of the tube but will break upon the addition of relatively little additional external force. Breakage of the core allows the tube to contract and securely cover and seal to the object to which the cover assembly applied.

EP-A-0 750 381 discloses a crushable core and cover assembly having an expanded elastomeric tubing and a crushable core. The cover assembly includes a crushable support for supporting an elastomeric tube which is recoverable to at least a part of its original size and shape after collapse of the support. The cover assembly comprises a plurality of substantially longitudinally extending portions and a plurality of connection portions. Each longitudinally extending portion is connected to and spaced apart from neighbouring longitudinally extending portions by at least one of the connection portions to form a rigid structure. At least one of the connection portions includes at least one frangible zone. Furthermore, EP-A-0 750 381 discloses methods of manufacturing the crushable support structure described above.

The invention is specified in the claims.

A device according to the present invention is provided for crushing or collapsing at least one crushable core. Such a device defines a space into which the crushable core is insertable and which extends at least in part over a circumference of the crushable core. In other words, the space not necessarily needs to extend over the entire circumference of the crushable core. Instead, a fixed space with a gap can be provided in which the crushable core is to be inserted. This does not make it necessary to provide any hinge or the like in order to open the space. The gap can, for example, be closed by an automatic means such as an expandable tubing. Furthermore, the device comprises means for reducing the space so as to crush or collapse said crushable core at least in part.

In a preferred embodiment, the space is defined by a casing. In a further preferred embodiment the means for reducing the space are arranged at the inner circumference of the casing. In a moreover preferred embodiment the space is reduced in at least essentially a radial direction of the crushable core. The term "radial direction" means a direction from the circumference of the crushable core to its longitudinal axis.

The invention proposes to replace the action of the manual operation by a device which effects the crushing or collapsing of the core and, therefore, the shrinking of the sleeve onto the article to be protected through some kind of a kneading process. The device typically is a tool small enough to be brought to the article to be protected. Such a tool is preferably in the form of a pair of pliers placed around the sleeve to be collapsed and is provided with a multiplicity of means that can be individually activated to apply pressure onto the crushable core with the sleeve at a relatively restricted portion of the circumference. A control system initiates the activation of these means in a defined sequence so that sequentially several of these means act on the core until it has completely collapsed.

In a preferred embodiment these means consist of a number of flexible tubings arranged around the core to be collapsed whereby these tubings can be expanded through the application of air or hydraulic pressure. The number of these tubings preferably should be at least eight and in a preferred configuration the compression can start by activating two of these tubings which are arranged opposite to each other, i.e. at an angular displacement of 180°. This causes a first breaking of some frangible portions of the core. In the following sequence tubings which are arranged opposite to each other but displaced by 90° from the first ones are expanded through pressurized fluid and cause the breaking of other frangible portions of the core. This can then be repeated until the core has completely collapsed. The tubings are placed within a mechanically stable system, e.g. a solid outer case typically divided into two halves to form the pair of pliers. This may be useful in order to allow the pressure to be guided onto the crushable core and the sleeve.

One aspect of the present invention is that forces are applied onto the crushable core within relatively small angular ranges and that this is repeated at other ones. However, it can be imagined that this can be effected through a large variety of sequences. Furthermore, instead of the tubings it could also be considered to utilize piston type components that can be pressed onto the crushable core preferably through pressurized fluids, particularly air or also electrically or mechanically. In this case, however, it should preferably be ensured that in the longitudinal direction preferably a longitudinal array of pistons is applied which allows to adjust them to the varying diameters of the object to be protected. This is of particular importance when covering an electrical splice which has a significantly larger diameter at the splice itself as compared to the portions of the cables that are connected.

The present invention provides several considerable advantages in the protection of extended articles against moisture, dirt or mechanical impact. In particular, the invention provides a fast and easy usable tool which provides a reliable and repeatable application result regarding appearance and water tightness of crushable cores in connection with cable harnesses.

In the following a preferred embodiment of the present invention will be described with reference to the drawings, in which:
- Fig. 1: is a longitudinal sectional view through the core crusher tool according to the present invention;
- Fig. 2: is a cross-sectional view along line A-A of Fig. 1;
- Fig. 3: is a cross-sectional view along line B-B of Fig. 1 of the core crusher tool according to the present invention;
- Fig. 4: is a schematic view showing the core crusher system according to the present invention; and
- Figs. 5A-5F: are cross-sectional views along line B-B of Fig. 1 showing an exemplary sequence of the core crushing process according to the present invention.

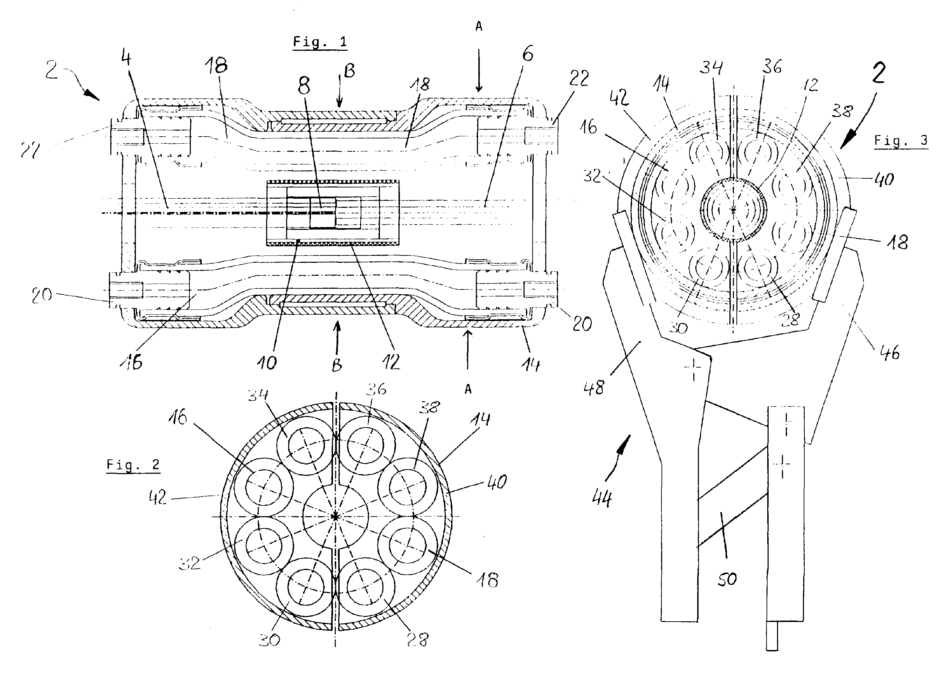

Fig. 1 provides a cross-sectional view of the core crusher tool 2 according to the present invention, whereby in the middle two cable bundles 4 and 6 can be seen that are connected to each other by a connector 8. For the purpose of this invention it is completely irrelevant which type of connection 8 is used and whether on both sides only a single cable is arranged or if there is a multiplicity of cables. The connectors as such can be of the screw type, the screwless type, the clamp type or anything else. The only significant aspect is that there is a portion of the extended element represented by the cables to be connected which needs a protection of the above described type. The crushable core 10 with the sleeve 12 to be collapsed is indicated schematically being placed over the connector 8. This can be seen in more detail from US-A-5 406 871, EP-A-0 530 952 or EP-A-0 750 381.

The connections 8 with the thus pre-arranged crushable core 10 and sleeve 12 as such are placed in the middle of the tool 2. The tool 2 has an outer case 14 which is not only a housing of the tool 2 but also is supposed to take over the forces during the crushing or collapsing process as it will be described below. Furthermore, it can be seen that within this outer case 14 in the cross-sectional representation of Figure 1 two tubings 16 and 18 can be seen which are attached to respective adapters 20 and 22 that allow to attach respective hoses 24 and 26 through which pressurized fluid, preferably air can be guided. In Figure 1 it is shown that these adapters 20 and 22 are placed on either end of the tubing 16 and 18, however, it can be imagined that this is only effected on one of the sides as the pressurized air would only have to be introduced from one side. The tubings 16 and 18 as such should be chosen so that they allow a high number of expansions in which the diameters of the tubings are significantly enlarged, however, without providing the effect that the tubing would not go back to its original position.

Figure 2 provides a cross-sectional view along the line A-A in Figure 1. It essentially shows that an arrangement has been chosen with eight tubings 16, 18, 28, 30, 32, 34, 36 and 38 which are equally spaced over the entire circumference so that each two of them are arranged at a relative angle of 45°. The system may also work with a smaller number such as six tubes, however, experiments have shown that under normal circumstances the preferred minimum of the tubings should be eight. The number can of course be increased which, however, provides a limit with respect to the external dimensions and the costs. Furthermore, it should be taken into account that the Figures only demonstrate the principle, a large variety of dimensional changes can be thought of in this particular configuration as shown in Figures 1 and 2, for example for a length of the crushable core of 45 mm, and its outer diameter of 20 mm, the length of the tool 2 may be in the range of 80-120 mm and its external diameter in the range of 50-80 mm. The expandable tubings can have an outer diameter of about 8-20 mm, preferably 15 mm, and a wall thickness of about 1-3 mm, preferably 2 mm, consisting of a flexible material such as silicone or the like capable of frequently expanding and setting back.

Furthermore, it should be taken into account that there is no need that the tool 2 has about two to three times the length of the crushable core 10, this is only a consequence from the special design as depicted in the Figures. Other configurations can be thought of which may have a length which is more or less comparable to that of the crushable core 10. The same applies for the outer diameter, here it should also be taken into account that the entire configuration can be made smaller than depicted. These are all details which would not represent any problem for someone skilled in the art as soon as the general principle has been understood.

Figure 2 shows that the outer case 14 consists of two halves 40 and 42 which, for example, could be screwed together or clamped together or held together in some other way.

Figure 3 shows a more preferred configuration in which the two halves 40 and 42 of the body of the tool 2 are portions of a pair of pliers 44. This means that each half 40 and 42 of the casing 14 is fixedly attached to an arm 46 and 48 of the pair of pliers 44 which then can be easily opened and closed by hand. The type of pliers is relatively irrelevant, any type of geometrical configuration can be thought of and it would be no problem for someone skilled in the art to find an appropriate solution for this geometry.

As the forces on the crushable core 10 have to be counter acted or supported by the outer case 14 the pair of pliers 44 would preferably be provided with means 50 (e.g., catch lever, spring, etc.) that upon closure of the pair of pliers 44 hold their parts together. This, for example, can be a snapping mechanism that is activated upon the closure of the pair of pliers 44. It can be an automatic snap-in action or an electrically, pneumatically or hydraulically triggered action practically causing a locking. It can be arranged at the arms of the pair of pliers as depicted in Figure 3 or directly at the outer case 14. After the crushing action the pair of pliers 44 has to be unlocked.

In the practical use the pair of pliers 44 would be opened and placed over the tube to be collapsed, locked as described above and then the system would be activated as described below. The locking mechanism 50 can be omitted if the applied forces are small enough to be taken over through the arms of the pliers.

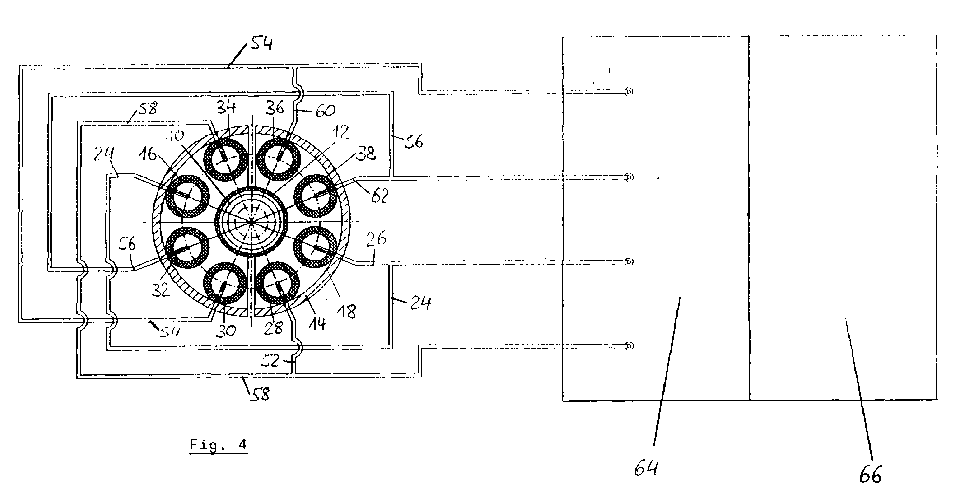

Figure 4 shows a circuit diagram of the pressurization of the tubings. On the left side the arrangement as depicted in Figure 2 can be seen with the crushable core 10 placed inside. Each of the tubes 16, 18, 28, 30, 32, 34, 36 and 38 is connected to a respective hose 24, 26, 52, 54, 56, 58, 60 and 62 through which pressurized fluid can be guided. In this particular configuration two opposite tubings obtain the pressure from the same source of pressurized fluid 64. Therefore, corresponding hoses 24 and 26, 52 and 58, 54 and 60 as well as 56 and 62 are connected to each other. The connected four hoses in this embodiment are connected to a control system 66 schematically shown on the right side of Figure 2. In this case each pair of opposite tubings can be independently pressurized through the control unit 66. Furthermore, the control unit 66 and/or the source of pressurized fluid 64 may include connections and means for the locking and unlocking of the pair of pliers.

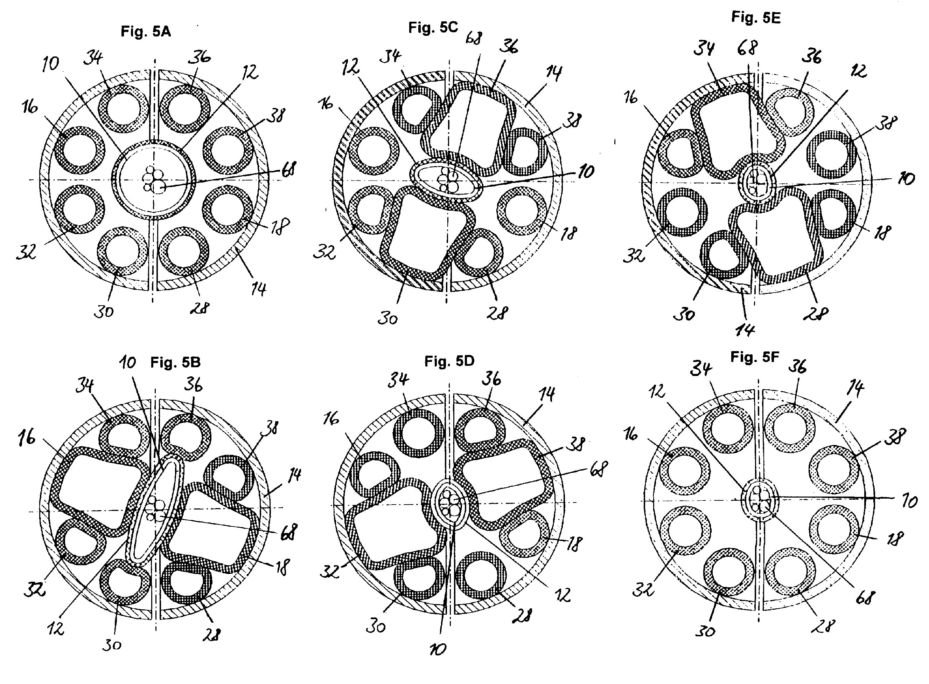

Figures 5A-5F show a possible way of utilizing the tool 2 and causing the collapse or crushing of the core 10.

Figure 5A is essentially identical to the configuration in Figure 4 or Figure 2 with the outer case 14 of the tool 2 split into the two halves 40 and 42 which can be part of a pair of pliers 44 and an arrangement of eight expandable hoses 16, 18, 28, 30, 32, 34, 36 and 38 the entire system being placed over the core 10 to be crushed. In this particular configuration it can be seen that the electrical connection 68 comprises five wires of different diameters. As mentioned above this is completely irrelevant for the description of the principle.

Figure 5B shows the first step of the selected sequence. Two of the eight tubings, namely tubes 16 and 18, are expanded for about 0.5 seconds through the application of pressurized fluid (air) of about 5 bars. As can be seen from Figure 4 these are connected to each other through the corresponding hoses 24 and 26. The activation is effected through the control unit 66. By this the crushable core 10 is compressed in substantially one single direction causing breakage of the frangible parts essentially at the portions displaced at 90° from the direction of the inflated tubings 16 and 18.

Figure 5C now shows that other tubings 30 and 36 are inflated which have an angular displacement of about 90° with respect to the first ones causing the crushable core 10 to be compressed into a direction or at an angle of 90° which effects a breakage of the frangible portions of the crushable tube at this portion. This step may start 0.1 seconds after the end of the first one and also last about 0.5 seconds.

Figures 5D and 5E then show the same function with respect to the tubings 32 and 38 (Figure 5D) and tubings 28 and 34 (Figure 5E) at angular displacements of 45° from the previous ones, respectively.

The end effect can then be seen from Figure 5F which differs from Figure 5A by the fact that now the crushable core 10 has been completely collapsed. This crushing or collapsing has been completed, typically within a few seconds taking into account that mastic material within the core can fill the interstices in the electrical connection. Finally, the tool 2 preferably in form of a pair of pliers 44 can be unlocked and opened and utilized for the next crushing or collapsing operation.

It should be noted that this is only one example. A multiplicity of variations can be thought of such as the utilization of a different number of inflatable tubings or a completely different type of a sequence. For example, it could be imagined that the arrangement consists of 12 inflatable tubings and that for some reasons three of them are pressurized forming a relative angle of 120°. Then the entire system is shifted by 60° again causing a breakage of the frangible parts of the crushable core 10. Furthermore, it should be considered that other parameters can be varied, while in Figures 5A-5F only pairs of hoses have been pressurized by a predetermined pressure of, for example, 5 bar. It also can be imagined that the pressure is continuously changed and that for example, a pair of inflatable tubings is pressurized and slowly de-pressurized while at the same time another pair is slowly pressurized. Furthermore, the timing of the individual steps in the sequence can be varied. Accordingly, a large variety of predetermined patterns (see claim 18) of the crushing process is possible. This shows that it is up to the person skilled in the art to select the appropriate and also least expensive method for a crushing sequence. This also may be dependent on the type of crushable cores, their diameter, etc. In certain cases a more sophisticated method may be required in other cases a crushing may be effected through only three, four or even less steps while in other cases it may take a larger number of steps. Furthermore, the means for reducing the space such as the tubings do not necessarily have to be arranged in a symmetric configuration as described. An arrangement on one half 42 (see Figure 2) of the outer case 14, for example, would be possible and may be advantageous in some applications. The basic purpose of the description is to show that crushing is obtained through one of the described sequences, however, that a multiplicity of them can be thought of so that Figures 5A-5F should only be understood as an example for the sequence.

## Claims

1. A device (2) for crushing or collapsing one or more crushable cores (10), said device (2) defining a space into which said crushable core(s) (10) is/are insertable and which extends at least in part over a circumference of the crushable core(s) (10), said device (2) further comprising means for reducing said space so as to crush or collapse said crushable core (10) at least in part.

2. The device (2) of claim 1, wherein said device (2) comprises a casing (14) defining- said space and/or wherein said reducing means reduces said space in at least a radial direction of said crushable core (10).

3. The device (2) of claim 1 or 2, wherein said means for reducing said space comprise at least one expandable tubing (16, 18, 28, 30, 32, 34, 36, 38) being connectable to a source of pressurized fluid (64).

4. The device (2) of claim 2 or 3, wherein a plurality of tubings (16, 18, 28, 30, 32, 34, 36, 38) is provided and arranged in said casing (14) in a manner to form said space therebetween into which said crushable core (10) is insertable.

5. The device (2) of claim 1 or 2, wherein said means for reducing said space comprises at least one piston type component being engageable with said crushable core (14).

6. The device (2) of claim 5, wherein a plurality of piston type components are provided in the longitudinal direction of the crushable core (10) in said casing (14).

7. The device (2) of any of claims 2 to 6, wherein said casing (14) has a substantially cylindrical shape and said means for reducing said space (16, 18, 28, 30, 32, 34, 36, 38) is arranged at an inner circumferential surface thereof.

8. The device (2) of any of claims 2 to 7, wherein said casing (14) is openable and closeable for introducing said crushable core (10).

9. The device (2) of claim 8, wherein said openable and closeable casing (14) is divided into two casing portions (40, 42), preferably casing halves (40, 42).

10. The device (2) of any of claims 1 to 9, wherein said means for reducing said space (16, 18, 28, 30, 32, 34, 36, 38) has a longitudinal extent at least corresponding to that of said crushable core (10).

11. The device (2) of any of claims 1 to 10, wherein said means for reducing said space (16, 18, 28, 30, 32, 34, 36, 38) is arranged in opposing pairs being connected with each other, respectively.

12. A pair of pliers (44) for collapsing crushable cores (10) comprising two arms (46, 48) and a device (2) according to any of claims 8 to 11.

13. The pair of pliers (44) of claim 12, further comprising a locking mechanism (50) that upon closure of said pliers (44) holds their arms (46, 48) in a fixed position.

14. A system for collapsing crushable cores (10) comprising:
a) a device (2) according to any of claims 1 to 11 or a pliers (44) according to claim 12 or 13;
b) means (64) for actuating said means for reducing said space (16, 18, 28, 30, 32, 34, 36, 38); and
c) control means (66) for controlling actuation of said means for reducing said space (16, 18, 28, 30, 32, 34, 36, 38).

15. The system of claim 14 and any one of claims 2 to 11, wherein at least two, preferably four pairs of means for reducing said space (30/36, 16/18, 28/34, 32/38) are arranged at an inner circumferential surface of said casing (14) and each of said pairs being independently controllable by said control means (66) and actuation means (64).

16. The system of claim 15, wherein said pairs are oppositely arranged, respectively.

17. The system of any of claims 14 to 16, wherein said control means (66) is adapted to effect actuation of said means for reducing said space (16, 18, 28, 30, 32, 34, 36, 38) in predetermined sequences.

18. The system of claim 17, wherein said control means (66) is adapted to effect actuation of said means for reducing said space (16, 18, 28, 30, 32, 34, 36, 38) for a predetermined period of time, with a predetermined pressure and/or in a predetermined pattern.

19. A method for crushing or collapsing crushable cores (10) comprising the steps of:
a) providing a space being able to take over forces generated during the crushing process;
b) arranging a crushable core (10) in said space; and
c) actuating means for reducing said space (16, 18, 28, 30, 32, 34, 36, 38) so as to cause breakage of frangible parts of said crushable core.

20. The method of claim 19, wherein said space is defined by a casing (14) and step b) comprises the steps of opening said casing (14), arranging said crushable core (10) in said casing (14) and closing said casing (14).

21. The method of claim 20, wherein a plurality of means for reducing said space (16, 18, 28, 30, 32, 34, 36, 38) are provided at an inner circumferential surface of said casing (14) which are actuated in predetermined sequences.

22. Use of the device of any of claims 1 to 11, the pair of pliers of claim 12 or 13, the system of any of claims 14 to 18 and/or the method of any of claims 19 to 21 for providing protection sleeves (12) for cable harnesses.
